# EUROPÄISCHE PATENTSCHRIFT

(11) **EP 0 823 366 B1**
(45) Veröffentlichungstag und Bekanntmachung des Hinweises auf die Patenterteilung: **18.09.2002**
(21) Anmeldenummer: 97109472.7
(22) Anmeldetag: 11.06.1997
(51) Int. Cl.: B62D 29/00, B62D 27/02, B62D 25/08, B60G 11/16, B60G 15/06

(54) **Federbeinaufnahme für ein Kraftfahrzeug, insbesondere Personenkraftwagen**
Support for the suspension strut of a motor car
Support pour une jambe de suspension d'un véhicule automobile

(30) Priorität: 30.07.1996 DE 19630647
(43) Veröffentlichungstag der Anmeldung: 11.02.1998
(73) Patentinhaber: Dr.Ing.h.c. F. Porsche Aktiengesellschaft, 70435 Stuttgart (DE)
(72) Erfinder: Vlahovic, Josip, 74321 Bietigheim-Bissingen (DE)

(56) Entgegenhaltungen:
- EP-A- 0 568 251
- EP-A- 0 733 542
- WO-A-94/04766
- DE-A- 4 204 825
- DE-A- 4 417 380
- FR-A- 2 702 710
- US-A- 4 618 163

## Beschreibung

Die Erfindung betrifft eine Federbeinaufnahme für ein Kraftfahrzeug, insbesondere Personenkraftwagen, die an zumindest einen angrenzenden Längsträger des Aufbaus angeschlossen und mit diesem fest verbunden ist.

Aus der DE 42 04 825 A1 geht eine durch ein Strangpreßprofilteil gebildete Federbeinaufnahme für einen Personenkraftwagen hervor, wobei das Strangpreßprofilteil einen angrenzenden Längsträger zumindest abschnittsweise formschlüssig umgreift und zusätzlich durch Kleben, Schweißen, Nieten oder dergleichen mit dem Längsträger verbunden ist.

Dieser Anordnung haftet der Nachteil an, daß das abgelängte Strangpreßprofil in Längsrichtung beidseitig offen ausgebildet ist, so daß es in Richtung der Federbeinachse nur eine geringe Torsionssteifigkeit aufweist.

Die linienförmige Anbindung der Federbeinaufnahme an einen einzigen Längsträger und die aus winkelig zueinander verlaufenden Abschnitten zusammengesetzte Schweißnaht sind nicht optimal.

Aufgabe der Erfindung ist es, die Federbeinaufnahmen eines Kraftfahrzeuges so weiterzubilden, daß sie nicht nur die vom Fahrwerk übertragenen Kräfte aufnehmen und in den angrenzenden Aufbau weiterleiten können, sondern daß sie darüber hinaus zu einer wesentlichen Erhöhung der Steifigkeit der Trägerstruktur beitragen.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß die durch einen aufrecht verlaufenden, im wesentlichen geschlossenen einstückigen Hohlkörper gebildete Federbeinaufnahme räumlich an einen oberen Längsträger und einen unteren Längsträger angeschlossen ist, wodurch die Federbeinaufnahme zu einer wesentlichen Erhöhung der Steifigkeit, insbesondere der Torsionssteifigkeit der Trägerstruktur, beiträgt. Der Hohlkörper wird in einfacher Weise und kostengünstig durch Innenhochdruckumformen hergestellt. Endseitige ringförmige Anschlußstutzen des Hohlkörpers werden außenseitig auf korrespondierende Aufnahmen der Längsträger aufgesetzt und zusätzlich durch Schweißen mit den angrenzenden Längsträgern fest verbunden, wobei ein Schweißnahtverlauf ohne Ecken vorgesehen ist.

Der Hohlkörper kann im Querschnitt gesehen Bereiche mit unterschiedlicher Wanddicke aufweisen, wobei die Wanddicke an die auftretenden Belastungen anpaßbar ist und somit zur Gewichtsoptimierung beiträgt.

Ferner besteht die Möglichkeit, die beiden Federbeinaufnahmen im oberen Bereich durch ein querverlaufendes trägerartiges Verbindungsteil miteinander zu verbinden, wobei das Verbindungsteil einstückig mit den beiden Federbeinaufnahmen ausgebildet ist und durch Innenhochdruckumformen eines Rohlings erstellt wird. Dies führt zu einer weiteren Versteifung der tragenden Struktur des Kraftfahrzeuges.

Ein Ausführungsbeispiel der Erfindung ist in den Zeichnungen dargestellt und wird im folgenden näher beschrieben.

Es zeigen
- Fig. 1: eine perspektivische Ansicht auf einen Teilbereich einer Trägerstruktur eines Kraftfahrzeuges mit einer Federbeinaufnahme,
- Fig. 2: einen Vertikalschnitt durch die Federbeinaufnahme gemäß Fig. 1,
- Fig. 3: eine perspektivische Ansicht einer weiteren Ausführungsform einer Trägerstruktur mit einer Federbeinaufnahme,
- Fig. 4: einen Schnitt nach der Linie IV-IV der Fig. 3 in größerem Maßstab,

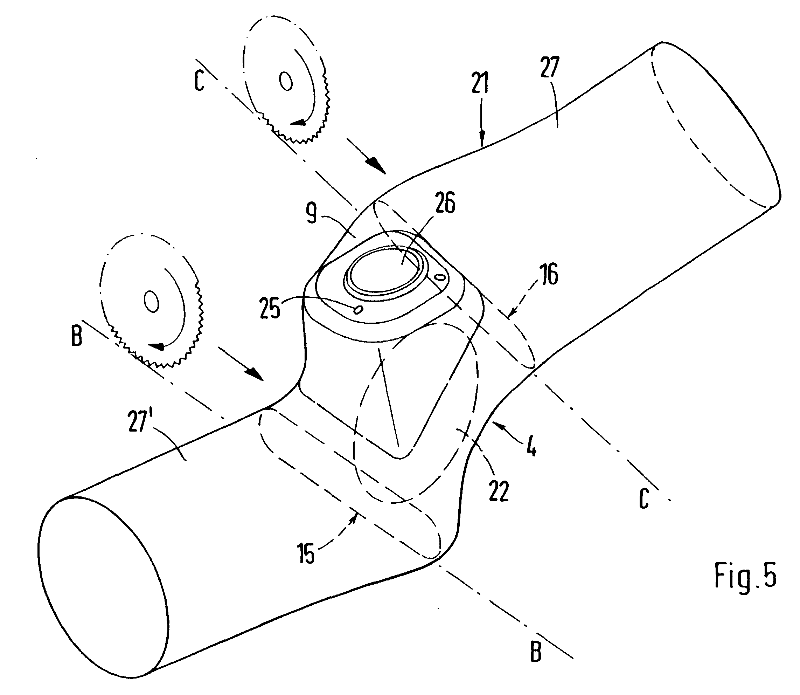

- Fig. 5: eine perspektivische Ansicht auf eine durch Innenhochdruckumformen hergestellte Federbeinaufnahme und
- Fig. 6: eine Ansicht von vorne auf zwei durch ein querverlaufendes Verbindungselement miteinander verbundene Federbeinaufnahmen.

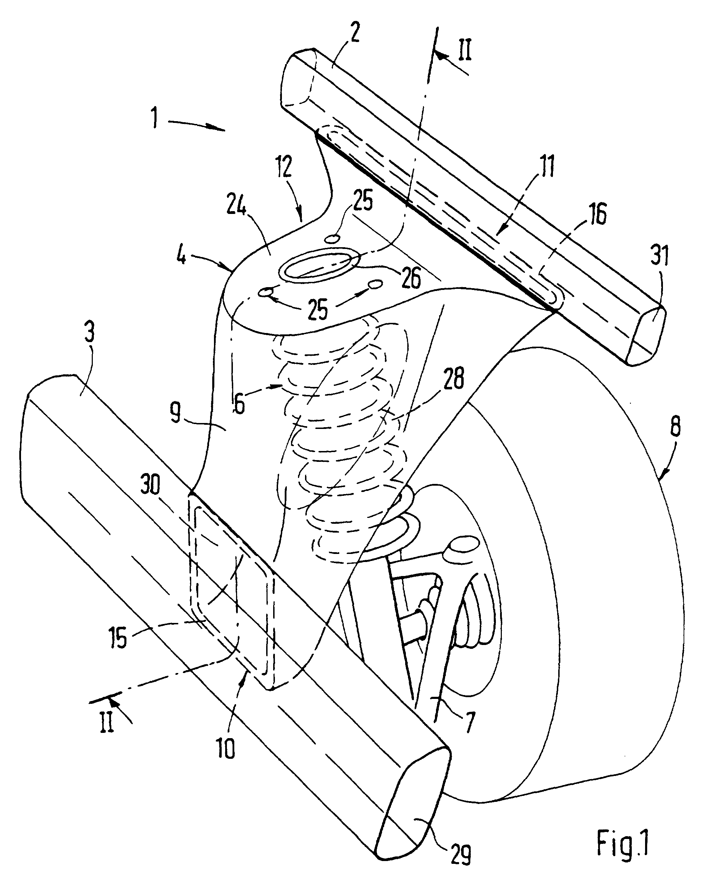

Fig. 1 zeigt einen Teilbereich einer endseitigen Trägerstruktur 1 eines Kraftfahrzeuges, die sich aus einem oberen Längsträger 2, einem unteren Längsträger 3 und einer Federbeinaufnahme 4 zusammensetzt. Die Trägerstruktur 1 kann im Bugbereich und/oder im Heckbereich des Kraftfahrzeuges vorgesehen sein.

Die beiden Längsträger 2, 3 sind in Höhenrichtung und in Querrichtung versetzt zueinander angeordnet, wobei der obere Längsträger 2 in Querrichtung gesehen weiter außen verläuft als der untere Längsträger 3. An der Federbeinaufnahme 4 ist das obere Ende 5 eines Federbeins 6 in herkömmlicher Weise befestigt. Das untere Ende des Federbeins ist beispielsweise an ein Radführungsglied 7 eines angrenzenden Rades 8 angeschlossen. Im Ausführungsbeispiel ist ein Mc-Pherson-Federbein mit einem oberen Federelement 28 dargestellt.

Erfindungsgemäß wird die Federbeinaufnahme 4 durch einen im wesentlichen geschlossenen, im Innenhochdruckumformverfahren hergestellten Hohlkörper 9 aus Stahl oder Leichtmetall gebildet. Ein erster offener Endbereich 10 des langgestreckten Hohlkörpers 9 ist an den unteren Längsträger 3 und der andere offene Endbereich 11 des Hohlkörpers 9 ist an den oberen Längsträger 2 derart angeschlossen, daß die beiden Längsträger 2, 3 und die Federbeinaufnahme 4 einen geschlossenen räumlichen Trägerverbund 12 mit im wesentlichen geschlosenen Hohlträgerabschnitten 29, 30, 31 bilden.

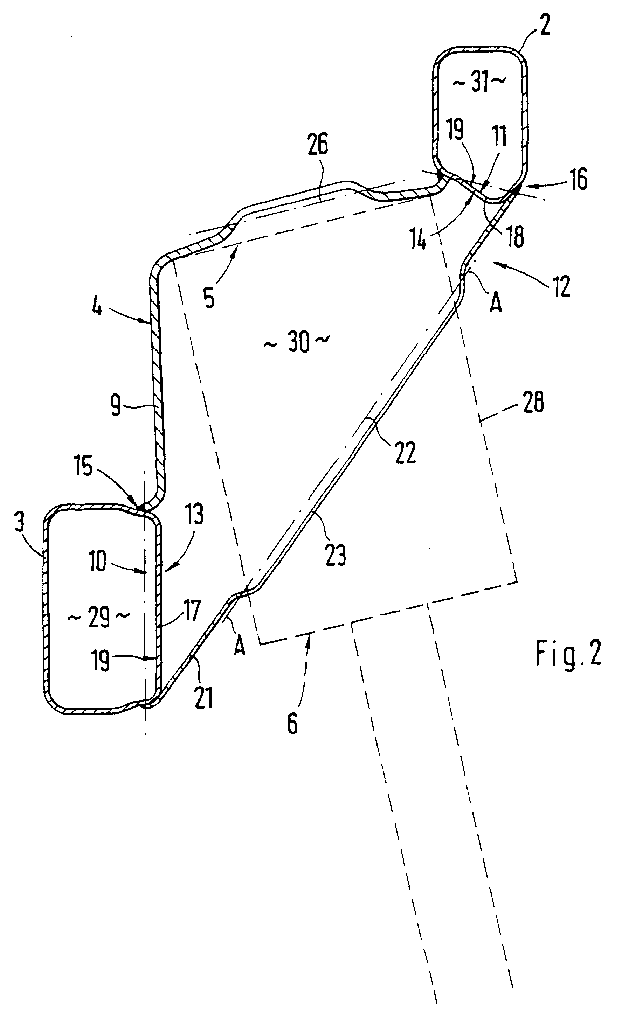

Gemäß den Fig. 1 und 2 ist der Hohlkörper 9 mit dem Endbereich 10 an die innenliegende Außenseite 13 des unteren Längsträgers 3 aufgesetzt und mit diesem fest verbunden, wogegen der andere Endbereich 11 des Hohlkörpers 9 an die Unterseite 14 des oberen Längsträgers 2 angeschlossen ist.

Am Hohlkörper 9 sind an beiden Endbereichen 10, 11 ringförmige Anschlußstützen 15, 16 ausgebildet, die mit korrespondierenden Aufnahmen 17, 18 der Längsträger 2, 3 formschlüssig zusammenwirken und zusätzlich durch Schweißen, Kleben oder dergleichen in Lage gehalten sind.

Gemäß Fig. 2 sind an den Längsträgern 2, 3 jeweils vorstehende flächige Ausbuchtungen 19 ausgebildet, die der Form der sie umgebenden Anschlußstützen 15, 16 des Hohlkörpers 9 angepaßt sind. Es besteht aber auch die Möglichkeit, anstelle der Ausbuchtungen 19 an den Längsträgern 2, 3 umlaufende kragenartige Aufnahmeflansche auszubilden, auf die außenseitig die Anschlußstutzen 15, 16 aufgesetzt sind.

Die oberen und unteren Längsträger 2, 3 sind vorzugsweise ebenfalls als Hydroformteile (im Innenhochdruckumformverfahren hergestellte Teile) ausgebildet. Die Anschlußstutzen 15, 16 können endseitig plan- oder sattelartig ausgebildet sein, wobei die zuletzt genannte Ausbildung eine optimale Anbindung an die Längsträger 2, 3 ergibt.

Es ist entweder eine umlaufende kontinuierliche Schweißnaht zwischen den Anschlußstutzen 15, 16 des Hohlkörpers 9 und den Längsträgern 2, 3 vorgesehen oder aber örtliche aneinandergesetzte Schweißnahtabschnitte, jedoch keine abgewinkelte oder eine zickzackförmige Schweißnaht.

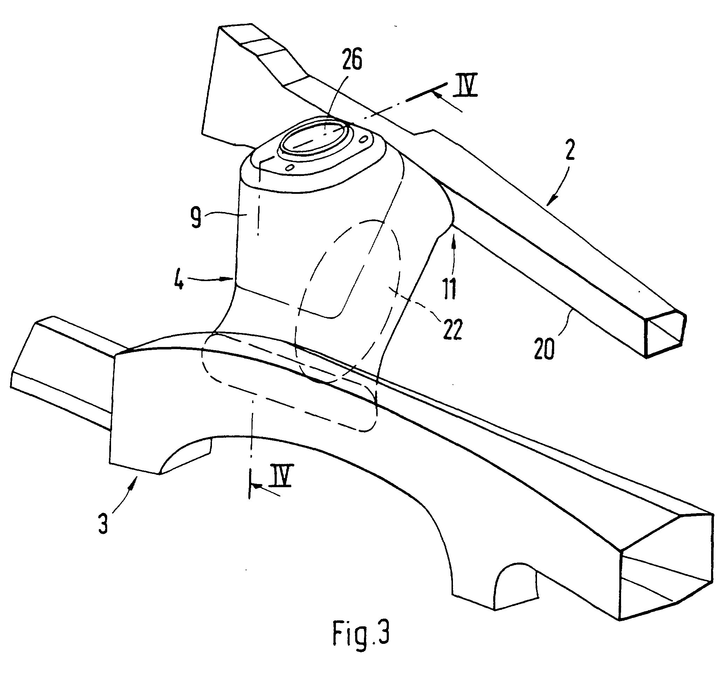

Gemäß Fig. 3 ist der obere Endbereich 11 des die Federbeinaufnahme 4 bildenden Hohlkörpers 9 an die Innenseite 20 des oberen Längsträgers 2 angeschlossen. Die Anbindung des unteren Endbereiches 10 erfolgt wie in den Figuren 1 und 2.

Der aufrechte Hohlkörper 9, der durch Innenhochdruckumformen eines vorgeformten Rohlings 21 in einem Werkzeug erstellt wird, weist entlang seiner Längserstreckung bzw. in Höhenrichtung sich ständig verändernde Querschnitte auf.

Zur Festlegung des oberen Endes 5 des Federbeins 6 sind an einem flächigen Auflagebereich 24 örtlich Durchgangsbohrungen 25 für Schraubenbolzen sowie eine zentrale Ausnehmung 26 vorgesehen.

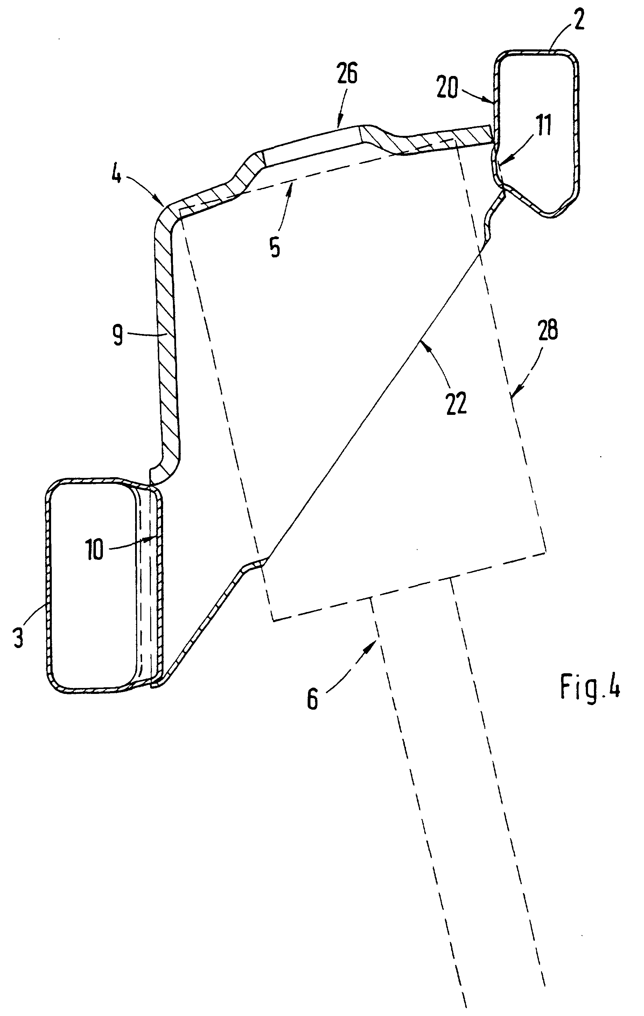

Der Hohlkörper 9 kann entweder eine gleichbleibende Wanddicke oder aber einen unterschiedlichen Wanddickenverlauf aufweisen, der an die auftretenden Kräfte angepaßt ist (siehe Fig. 2 und 4).

Zum Einsetzen des Federbeins 6 wird nach dem Innenhochdruckumformen an einer aufrechten Wandung 21 des Hohlkörpers 9 eine Öffnung 22 angebracht. Diese kann beispielsweise durch Absägen einer beim Innenhochdruckumformen ausgebildeten Ausprägung 23 gebildet werden (siehe Schnittlinie A-A).

Der vorgebogene Rohling 21 wird nach dem Innenhochdruckumformen entlang der Schnittlinien B-B und C-C abgesägt, wobei die Endstücke 27, 27' vom Hohlkörper 9 getrennt werden.

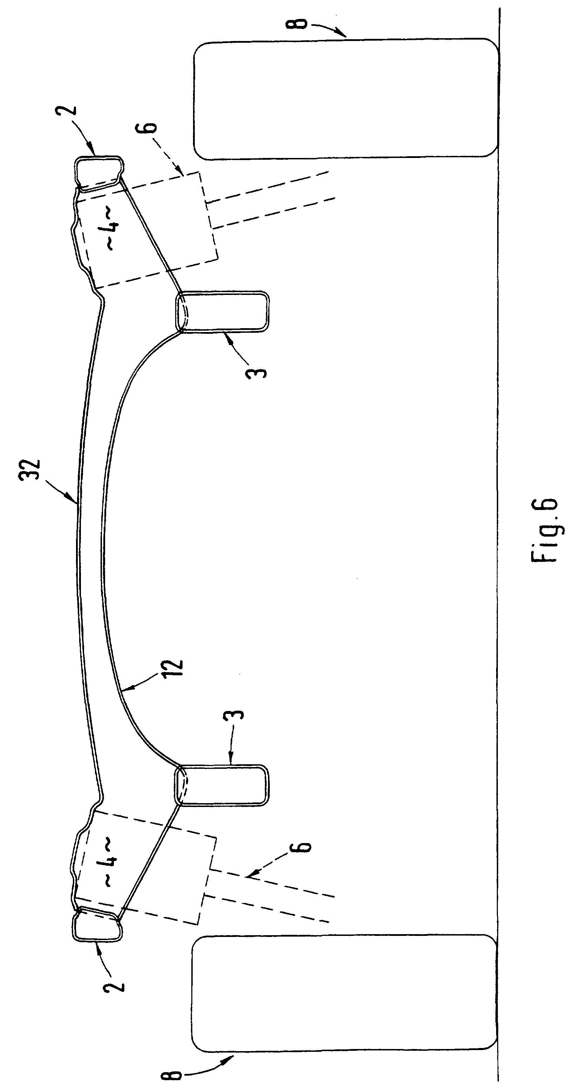

Gemäß Fig. 6 ist vorgesehen, daß die beiden gegenüberliegenden Federbeinaufnahmen 4, 4' durch ein querverlaufendes Verbindungsteil 32 miteinander verbunden sind, wobei das Verbindungsteil 32 einstückig mit den beiden Federbeinaufnahmen 4, 4' ausgebildet und durch Innenhochdruckumformen eines rohrförmigen Ausgangsteiles (Rohling) erstellt wird.

## Patentansprüche

1. Federbeinaufnahme für ein Kraftfahrzeug, insbesondere Personenkraftwagen, wobei die einstückig ausgebildete Federbeinaufnahme mit zumindest einem angrenzenden Längsträger der Aufbaustruktur fest verbunden ist, **dadurch gekennzeichnet, daß** die Federbeinaufnahme (4) durch einen im wesentlichen geschlossenen, im Innenhochdruckumformverfahren hergestellten Hohlkörper (9) gebildet wird, wobei der eine offene Endbereich (10) des Hohlkörpers (9) an einen unteren Längsträger (3) und der andere offene Endbereich (11) des Hohlkörpers (9) an den oberen Längsträger (2) angeschlossen sind und die Federbeinaufnahme (4) mit den angrenzenden Längsträgern (2, 3) einen räumlichen Trägerverbund (12) mit geschlossenen Hohlträgerabschnitten (29, 30, 31) bildet.

2. Federbeinaufnahme nach Anspruch 1, **dadurch gekennzeichnet, daß** der Hohlkörper (9) endseitige ringförmige Anschlußstutzen (15, 16) aufweist, die mit korrespondierenden Aufnahmen (17,18) der Längsträger (2, 3) formschlüssig zusammenwirken und zusätzlich durch Schweißen, Kleben oder dergleichen mit den Längsträgern (2, 3) fest verbunden sind.

3. Federbeinaufnahme nach Anspruch 2, **dadurch gekennzeichnet, daß** die Aufnahmen (15, 16) an den Längsträgern (2, 3) jeweils durch eine vorstehende Ausbuchtung (19) gebildet werden, die der Form des sie umgebenden Anschlußstutzens (15, 16) des Hohlkörpers (9) angepaßt ist.

4. Federbeinaufnahme nach Anspruch 2, **dadurch gekennzeichnet, daß** die Aufnahmen (15, 16) an den Längsträgern (2, 3) durch jeweils einen vorstehenden kragenartigen Aufnahmeflansch gebildet werden, auf den der Anschlußstutzen (15, 16) des Hohlkörpers (9) aufgesetzt ist.

5. Federbeinaufnahme nach Anspruch 1, **dadurch gekennzeichnet, daß** der Hohlkörper (9) örtlich mit einer Öffnung (22) zum Hindurchführen des Federbeins (6) versehen ist.

6. Federbeinaufnahme nach einem oder mehreren der vorangegangenen Ansprüche, **dadurch gekennzeichnet, daß** die oberen und unteren Längsträger (2, 3) ebenfalls als Hydroformteile ausgebildet sind.

7. Federbeinaufnahme nach einem oder mehreren der vorangegangenen Ansprüche, **dadurch gekennzeichnet, daß** gegenüberliegende Federbeinaufnahmen (4, 4') durch ein querverlaufendes Verbindungsteil (32) miteinander verbunden sind, wobei das Verbindungsteil (32) einstückig mit den beiden Federbeinaufnahmen (4, 4') ausgebildet und durch Innenhochdruckumformen eines rohrförmigen Ausgangsteils erstellt wird.

## Claims

1. A receiving means for a suspension strut for a motor vehicle, in particular a passenger car, wherein the suspension-strut receiving means constructed in one piece is rigidly connected to at least one adjacent longitudinal support of the body structure, **characterized in that** the suspension-strut receiving means (4) is formed by a substantially closed hollow member (9) produced in the internal high-pressure shaping process, wherein one open end region (10) of the hollow member (9) is attached to a lower longitudinal support (3) and the other open end region (11) of the hollow member (9) is attached to the upper longitudinal support (2), and with the adjacent longitudinal supports (2, 3) the suspension-strut receiving means (4) forms a three-dimensional support assembly (12) with closed hollow-member portions (29, 30, 31).

2. A receiving means for a suspension strut according to Claim 1, **characterized in that** the hollow member (9) has annular attachment supports (15, 16) at the end, which cooperate with corresponding receiving means (17, 18) of the longitudinal supports (2, 3) with positive locking and, in addition, are rigidly connected to the longitudinal supports (2, 3) by welding, adhesion or the like.

3. A receiving means for a suspension strut according to Claim 2, **characterized in that** the receiving means (15, 16) on the longitudinal supports (2, 3) are formed in each case by a projecting bulge (19) which is adapted to the shape of the attachment connexion (15, 16) of the hollow member (9) which surrounds it.

4. A receiving means for a suspension strut according to Claim 2, **characterized in that** the receiving means (15, 16) on the longitudinal supports (2, 3) are formed in each case by a projecting collar-like receiving flange on which the attachment connexion (15, 16) of the hollow member (9) is mounted.

5. A receiving means for a suspension strut according to Claim 1, **characterized in that** the hollow member (9) is provided locally with an opening (22) for passing through the suspension strut (6).

6. A receiving means for a suspension strut according to one or more of the preceding Claims, **characterized in that** the upper and lower longitudinal supports (2, 3) are likewise constructed as hydroformed parts.

7. A receiving means for a suspension strut according to one or more of the preceding Claims, **characterized in that** opposed suspension-strut receiving means (4, 4') are connected to one another by a transversely extending connecting part (32), wherein the connecting part (32) is constructed in one piece with the two suspension-strut receiving means (4, 4') and is produced by internal high-pressure shaping of a tubular starting part.

## Revendications

1. Logement pour jambe de force à ressort pour un véhicule automobile, en particulier une voiture de tourisme, dans lequel le logement de jambe de force à ressort conformé d'une seule pièce est solidaire d'au moins un longeron adjacent de la structure de la carrosserie, **caractérisé en ce que** le logement (4) de la jambe de force à ressort est formé par un corps creux (9) essentiellement fermé, fabriqué par un procédé de formage sous haute pression interne, une zone terminale ouverte (10) du corps creux (9) étant raccordée à un longeron inférieur (3) et l'autre zone terminale ouverte (11) du corps creux (9) étant raccordée au longeron supérieur (2), et le logement (4) de la jambe de force à ressort formant avec les longerons (2, 3) adjacents un assemblage porteur (12) spatial avec tronçons de poutres creuses (29, 30, 31) fermés.

2. Logement pour jambe de force à ressort selon la revendication 1, **caractérisé en ce que** le corps creux (9) comporte des tubulures de raccord (15, 16) terminales de forme annulaire qui coopèrent, par complémentarité de forme, avec des logements (17, 18) correspondants des longerons (2, 3), et qui en plus sont reliés fixement aux longerons (2, 3) par soudage, collage ou similaire.

3. Logement pour jambe de force à ressort selon la revendication 2, **caractérisé en ce que** les logements (15, 16) sur les longerons (2, 3) sont formés chacun par un bombement (19) saillant qui est adapté à la forme de la tubulure de raccord (15, 16) du corps creux (9) qui l'entoure.

4. Logement pour jambe de force à ressort selon la revendication 2, **caractérisé en ce que** les logements (15, 16) sur les longerons (2, 3) sont formés chacun par une bride de réception de type collerette saillante sur laquelle est placée la tubulure de raccord (15, 16) du corps creux (9).

5. Logement pour jambe de force à ressort selon la revendication 1, **caractérisé en ce que** le corps creux (9) est pourvu par endroits d'une ouverture (22) pour le passage de la jambe de force à ressort (6).

6. Logement pour jambe de force à ressort selon une ou plusieurs des revendications précédentes, **caractérisé en ce que** les longerons supérieur et inférieur (2, 3) sont également conformés en éléments hydroformés.

7. Logement pour jambe de force à ressort selon une ou plusieurs des revendications précédentes, **caractérisé en ce que** des logements (4, 4') opposés sont reliés entre eux par un élément de liaison (32) s'étendant transversalement, l'élément de liaison (32) étant réalisé d'une seule pièce avec les deux logements (4, 4') et réalisé par formage sous haute pression interne d'un élément de départ de forme tubulaire.
